# EUROPEAN PATENT APPLICATION

(11) **EP 4 697 693 A1**
(43) Date of publication of application: **18.02.2026**
(21) Application number: 24194200.2
(22) Date of filing: 12.08.2024
(51) Int. Cl.: H04M 3/40, H04M 3/56, H04M 3/42

(54) **METHOD FOR PROTECTING COMMUNICATIONS FROM SOUND LEAKAGES**

(71) Applicant: Unify Beteiligungsverwaltung GmbH & Co. KG, 81739 München (DE)
(72) Inventor: Brochonski, Michael, 82620-265 Curitiba (BR); Papadopoulos, Gavriil, 11528 Athens (GR); Tsiatsikas, Zisis, 55534 Thessaloniki (GR); Lederer, Thomas, 82211 Herrsching (DE)
(74) Representative: Schaafhausen, Anne

(57) **Abstract**

The invention relates to a method for protecting communications from sound leakages, and a corresponding system which is adapted to perform the inventive method. The inventive method offers a possibility to detect sound leakages and to alert participants in an online conference that information shared in the conference may be overheard by individuals not participating in the conversation but being in the environment of one participant. Thus, the privacy of end-users from sound leakages is protected by taking advantage of multiple devices in the same physical space.

## Description

The present invention relates to a method for protecting communications from sound leakages and a system for performing said method.

Online conferences, also named communication and collaboration sessions, are widely used in various fields, including business, education, healthcare, technology, and more to connect professionals, share knowledge, collaborate, and reach a global audience. During those sessions, there are numerous scenarios where participants seek to safeguard their privacy. For instance, if one participant shares its space with others in a co-working or open space office, it may result in unwanted information disclosure. Even with headsets used, there is a possibility that a person who is nearby the participants of an online conference may be able to follow the conversation because of the high-volume setting of the headset. Thus, ensuring privacy during online conferences is critical to protect sensitive information. This does not solely apply to the digital means but also to the natural environment that the participants of the conference reside to.

Thus, there is a need in the art to provide a method to detect sound leakage levels and warn participants in an online conference that information shared in the conference may be overheard by individuals not participating in the conversation because one or more participant(s) is/are not alone in their physical space. Depending on the circumstances, in a communication session, there may be participants who can securely listen to a conversation but not talk freely, other participants may be able to listen and talk securely, and again other participants may not be able to listen or talk securely, the latter e.g. when driving in a car with other people.

A possibility that is described in the prior art is the use of sound masking. Sound masking is a technology that uses background noise to make other sounds less noticeable. It is often used in offices, medical facilities and public spaces to enhance privacy and reduce distractions. Sound masking can be implemented in various ways to make people aware that their phone conversations might be overheard. One way is to install sound masking systems in offices or public spaces. These systems generate a gentle background noise that reduces speech intelligibility, thereby increasing the privacy of phone conversations. Also, sound masking applications (apps) are available for smartphones or computers that generate continuous background noise. These apps can be particularly useful in open workspaces or when working from home.

However, the prior art fails to describe a method to protect the privacy of end-users from sound leakages by taking advantage of multiple devices in the same physical space.

Therefore, the present invention is based on the object to provide a method for protecting communications from sound leakages and a corresponding system that take advantage of multiple devices.

This object is solved by a method having the features according to claim 1, and a system having the features of claim 14.

Preferred embodiments of the invention are defined in the respective dependent claims.

According to the invention, a method for protecting communications from sound leakages is provided, the method comprising the steps of: initiating, by a first user, a call with at least one second user; establishing, by a first device of the first user, a call with a device of the at least one second user; checking, by the first device, whether a headset is connected to the first device; checking, by the first device, whether there is at least one second device of the first user present, in case a headset is connected; monitoring, by the at least one second device, the environment of the first device, in case there is at least one second device present; checking, by the at least one second device, whether there is a sound in the environment of the first device; analyzing and classifying, by the at least one second device, the sound pattern, in case a sound is detected in the environment of the first device; alerting, by the at least one second device, the first and/or the at least one second user of the detected sound; adjusting, by the first user or by the device(s) of the first and/or the at least one second user, the sound level of the device(s), and/or muting, by the device of the at least one second user, by itself; and terminating the method.

In the meaning of the present invention, the first device may sense the beacons send by the wireless interfaces of each one of the further devices of the first user to know whether at least one second device of the first user is present.

In the meaning of the present invention, adjusting the sound level of the first device of the first user automatically is performed upon detecting, by the second device of the first user, a sound input from the first device or from the headset. Thus, the sound in the first device or the headset is gradually reduced until the second device is not able to detect any sound anymore. Adjusting the sound of the first device by the first user himself/herself is performed upon detecting a sound by the second device and informing the first user with a sound or a text message in the first device so that he/she may calibrate the sound of the first device accordingly.

The sound level of the device of the at least one second user may be adjusted automatically as described above for the first device of the first user.

In the meaning of the present invention, muting the second user is performed upon detecting a sound leakage in the second device of the first user, whereupon said device may inform the device of the second user to mute itself.

According to a preferred embodiment, in case no headset is connected, the method further comprises: using, by the first device, the built-in microphone of said device; checking, by the first device, whether there is at least one second device of the first user present; monitoring, by the at least one second device, the environment of the first device, in case there is at least one second device present; checking, by the at least one second device, whether there is a sound in the environment of the first device; analyzing and classifying, by the at least one second device, the sound pattern, in case a sound is detected in the environment of the first device; alerting, by the at least one second device, the first and/or the at least one second user of the detected sound; adjusting, by the first user or by the device(s) of the first and/or the at least one second user, the sound level of the device(s), and/or muting, by the device of the at least one second user, the device of the at least one second user; and ending the method.

According to another preferred embodiment, in case no second device of the first user is present, said user is alerted by the first device to switch on at least one more of his/her devices.

According to still another preferred embodiment, the headset is connected to the first device via a Universal Serial Bus (USB) connection or a wireless connection such as Bluetooth, WiFi or ZigBee.

Further, according to a preferred embodiment, in case no sound is detected, the method further comprises: checking, by the first device, whether a headset is connected to the first device; checking, by the first device, whether there is at least one second device of the first user present, in case a headset is connected; monitoring, by the at least one second device, the environment of the first device, in case there is at least one second device present; checking, by the at least one second device, whether there is a sound in the environment of the first device.

According to yet another preferred embodiment, the devices of the first and at least second user are selected from laptops, mobile phones, smart phones and/or desktop computers.

According to still another preferred embodiment, the at least one second device of the first user has an app and/or software component installed for monitoring the environment around the first device of the first user.

According to yet another preferred embodiment, the first device shares voice and/or audio streams with the at least one second device of the first user.

According to a further preferred embodiment, the step of analyzing and classifying the detected sound further comprises: classifying the detected sound as being a sound leakage from the voice and/or audio stream, or classifying the detected sound as being multiple voices, footsteps, and/or background noise.

In the meaning of the present invention, sound leakage is the sound that escapes from an audio device, such as built-in microphones, headphones or earphones, and can be heard by people nearby. Background noise, voices, footsteps, etc. is unwanted ambient noise that is present in the environment and is not produced by the audio device itself.

According to still another preferred embodiment, in case a sound leakage from the voice and/or audio stream is detected, the first user is alerted using an audio message and/or a popup message to lower the sound level of the headset or the built-in microphone of the first device.

According to a more preferred embodiment, in case multiple voices, footsteps and/or background noises are detected, the first and the at least one second user are alerted using an audio message and/or a popup message, and the sound level of the devices of the first and the at least one second user are automatically adjusted or the device of the at least one second user is muted.

According to yet another preferred embodiment, after analyzing and classifying, by the at least one second device, the sound pattern, in case a sound is detected in the environment of the first device, the method further comprises: comparing, by the at least one second device, a sample stream with parts of the voice and/or audio stream shared by the first device with the at least one second device; and creating, by the first device, an alert message to the users' screen(s) in case the similarity of the sample stream and the voice and/or audio stream shared by the first device exceeds a threshold.

According to yet a more preferred embodiment, the threshold is in the range of between 30 to 70 dB, preferably between 35 to 65 dB, and more preferably between 40 and 60 dB.

In the meaning of the present invention, the at least one second user may get alerted about a sound leakage if the sound pattern is not a sound leakage from the voice and/or audio stream and if the sound pattern is above the threshold as mentioned above. If the sound leakage is below the threshold or if the sound pattern is a sound leakage from the voice and/or audio stream, the at least one second user may not get alerted about the sound leakage.

According to yet another aspect of the present invention, a system for protecting communications from sound leakages is provided, wherein the system is configured to perform the method according to the present invention.

According to a preferred embodiment, the system according to the invention comprises a communication server, a first device and a second device of the first user and a device of a second user.

In the meaning of the present invention, there may be a third user or any further users participating in the call. All said users have at least one device.

In the meaning of the present invention, the terms "user" and "participant" are used interchangeably throughout the present description to refer to an individual who attends an online conference with the purpose of engaging in discussions, learning, networking, or contributing to the exchange of ideas and information.

In the meaning of the present invention, the term "call" refers to a connection between at least two entities that includes the exchange of data in various forms like text, audio and/or video.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed by this text. In particular combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).
- Fig. 1: shows a flowchart of the method for protecting communications from sound leakages according to an embodiment of the invention;
- Fig. 2: shows a schematic illustration of the communication between the devices according to another embodiment of the invention;
- Fig. 3: shows a schematic overview of the system components of the invention according to another embodiment of the invention.

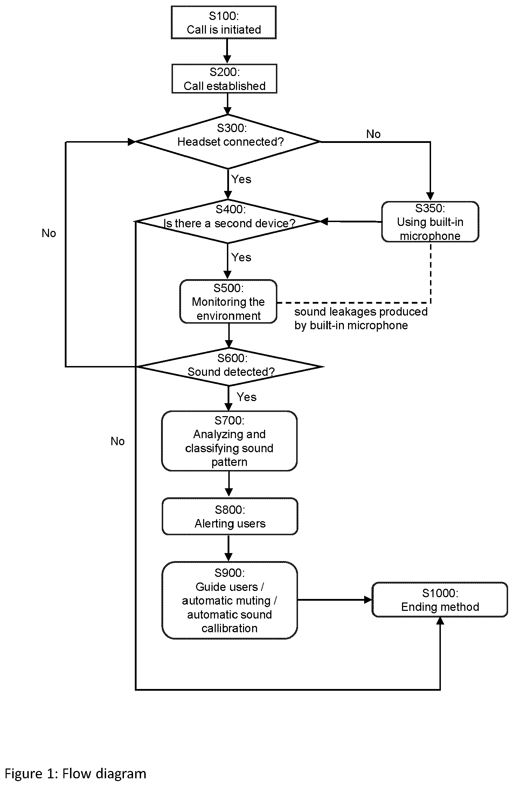

Figure 1 shows a flowchart of the method for protecting communications from sound leakages according to an embodiment of the present invention.

Upon call initiation and establishment between the first and the second user in steps S100 and S200, the first device of the first user may check whether the first user has connected any headset device to his/her first device in step S300. The headset may be connected via any type of connection such as a USB, or a wireless connection. This step may also be used to evaluate the privacy level initially. In case a headset is connected, the inventive method may be more efficient in reducing possible privacy leakages from the environment. In case no headset is connected, the build-in microphone of the first device may be used in step S350. Regardless of whether a headset is connected or whether the built-in microphone is used, in the next step S400, the first device of the first user checks whether there is at least one second device of the first user present. In case no second device of the first user is present, said user may be alerted by the first device to switch on at least one more of his/her devices (not shown). If still no second device of the first user is present after alerting the first user to switch on at least one more of his/her devices, the method is terminated in step S1000.

In case there is at least one second device of the first user present, in step S500, said at least one second device may monitor the environment of the first device of the first user and may check for a sound in the environment of said first device in step S600. Exemplarily, sound leakages produced by the built-in microphone and detected in step S500 are shown in Figure 1, indicated as a dashed line. In case no sound is detected, steps S300 to S600 are repeated. In case a sound is detected by the at least one second device of the first user, said second device analyzes and classifies the sound pattern (step S700). If the detected sound is classified as a sound leakage from the stream shared by the first device, in step S800, the first user is alerted about said leakage by an audio and/or popup message sent to the first device by the at least one second device of the first user. Upon said alert, the first user may adjust the sound level of the first device in step S900 on his/her own. If the detected sound is classified as sound patterns like multiple voices, footsteps, and/or background noise such as train or car noises which may indicate that the user(s) are in an open space where the conversation could be overheard, in step S800, the first and the at least one second user are alerted of the detected sound, whereupon in step S900 the sound level of the first device of the first user and of the device of the at least one second user may get adjusted automatically, or the device of the at least one second user may be muted. In step S1000, the method ends.

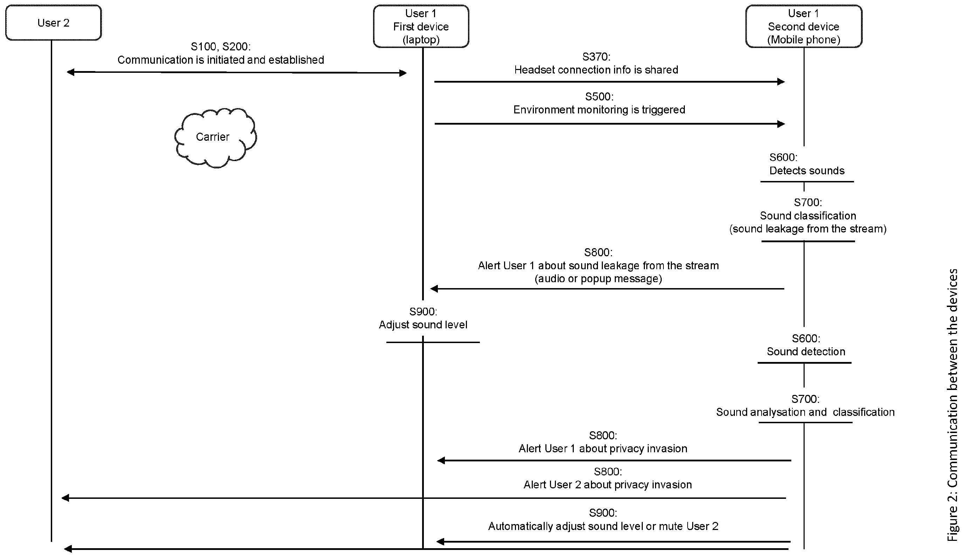

In Figure 2, the communication between the devices according to an embodiment of the invention is schematically illustrated. After the communication is initiated between the first (User 1) and the at least one second user (User 2) (steps S100 and S200), the first device of the first user shares the voice/audio hardware information capabilities with the second device(s) of the first user in step S370. Thus, the first device shares information with the at least one second device of the first user that there either a headset is connected to the first device or that the built-in microphone is used. In addition, the first device of the first user shares the information with the at least one second device of the first user how the connection with the headset is accomplished. The second device(s) of the first user start the environment monitoring process to identify potential eavesdroppers in the same physical space as the first device in step S500. Said monitoring by the second device is triggered by the first device when a new event takes place in the first device, such as initiating or receiving a call. If a sound is detected in step S600 by the at least one second device, the sound pattern is analyzed and classified in step S700, also by the at least one second device. If a sound leakage is detected in the audio stream (S600), the first user is alerted and informed accordingly (S700). In reply to the alert, the first user may lower the sound level of the headset. In case, another sound pattern is identified by the second device of the first user, e.g. footsteps, the first and the at least one second user may get alerted about the sound leakage and the sound of the first and the at least one second user may get adjusted automatically, or the device of the at least one second user may be muted to avoid sound leakages in the physical space of the first user. Muting is performed by informing the device of the at least one second user about the sound leakage via the second device of the first user, whereupon the device of the at least one second user does mute itself.

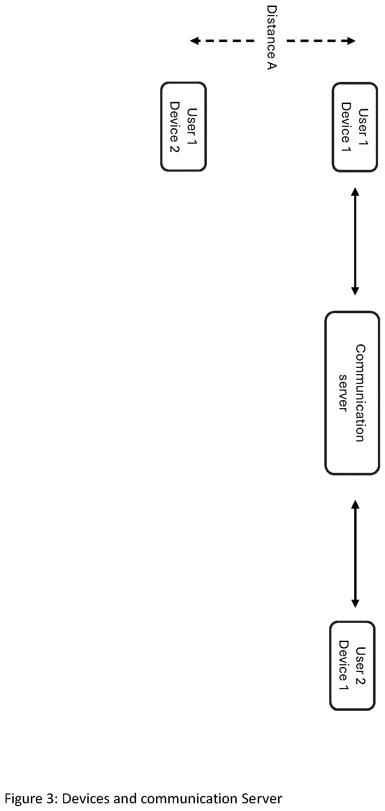

Figure 3 schematically shows an overview illustrating the invention, namely the users, their devices and the communication server. As can be seen from the figure, the first device of the first user (User 1) is in connection with the communication server and vice versa. The same is true for the device of the second user (User 2). In the meaning of the present invention, each time a session is initiated between at least two users (User 1 and User 2), the user that initiates the session, User1, may be alerted to switch on at least one more of his/her devices. Said at least one more device may have an app or software component, component M, installed and may be used to monitor the physical space around User 1. The two devices of the first user, User 1, have a certain distance to one another, depicted as distance A in Figure 3. Software component M may use the secondary devices sensors, e.g. the microphone, but also other sensors such as camera, Bluetooth-scanning of other non-user devices close by, and/or Wi-Fi (e.g. detecting that the first user is on a public Wi-Fi) for calculating the privacy level that the user belongs to. The sound leakage levels in the physical space of the first device of the first user may be correlated with the number of devices that the first user is carrying. By correlating the input sound samples, the inventive method may alert the user(s) if there are certain sound leakages.

To illustrate the present invention in more detail, further embodiments are depicted:

### Embodiment 1:

The inventive method is again initiated by starting a communication session between a first user and at least one second user. During the communication, the second device(s) of the first user may be employed to sample any noise from the physical space of the first device of the first user. In case a sound is detected, the sample stream may be compared to parts from the audio stream which was shared by the first device. If the similarity exceeds a threshold, an alert message to the first users' screen may be created. In the meaning of the present invention, machine learning (ML) models may be trained to recognize specific sounds associated with multiple people being present in a room, such as multiple voices, footsteps, or background noises indicative of a crowded space. Thus, according to the present invention, audio input may continuously be monitored, and alerts to the first user and the at least one second user may be provided when such specific patterns are detected.

### Embodiment 2:

If, upon detecting a sound leakage and comparing the detected sound with sound patterns trained in the ML models, a positive result is returned, the ML algorithm may guide the second user to calibrate the sound level in such a way that the privacy is preserved in the physical space of the first user. Said guiding by the ML algorithm may happen by guiding the user device(s) in sending metadata with an audio level intensity (threshold) that matches the user device(s)' profile. In addition, the microphone of the second user(s) may be automatically muted, of which the respective user may get notified by the second device of the first user.

### Embodiment 3:

According to the present invention, wearable devices (headsets, smart watches, and/or other bluetooth-capable devices) equipped with sensors that may detect environmental sounds and analyze acoustic patterns in real-time may be used. Said sensors can be worn discreetly by users during communication sessions and provide haptic feedback or visual alerts when potential privacy breaches are detected.

A headset device may create an isolated environment for the user in a way that the latter may not identify the presence of a person in the same room who is not participating in the conference. Yet, the second device(s) may be used to alert the user that he/she is not alone in the same physical space by detecting any sound made by said person. In the meaning of the present invention, the second device may be purposely left close to the room door, or to other places, depending on the scenario, to inspect potential visitors that otherwise would have gone unnoticed by the user. Thus, the user(s) may get alerted that the sound levels may be adjusted automatically (i.e., the sound that is heard from the headset as the visitor approaches the exposed user is lowered automatically). In addition, the second device(s) may monitor the steps of the visitors in the lack of other technical means like cameras, whereupon the exposed user may be able to know the position of the visitor without having necessarily a line-of-sight contact with him/her.

### Embodiment 4:

The input sound from the secondary device(s) may also be fed into an artificial intelligence (Al) algorithm that may generate a distinct step pattern depending on the person. Thus, it can be used as a user-identification mechanism in the form of audio signatures that may identify a person through a distinct step sound profile.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

| | |
|---|---|
| S100-S1000 | steps of the inventive method |
| M | software component |
| User 1 | first user |
| User 2 | at least one second user |
| distance A | distance of the different devices of the first user to one another |
| carrier | a kind of electronic communication service provider, more precisely, a telecommunications service provider (TSP) that provides telecommunications services such as telephony and data communications access. Many also function as internet service provider (ISP) *** |

## Claims

1. A method for protecting communication from sound leakages, wherein the method comprises the steps of:
- S100: initiating, by a first user, a call with at least one second user;
- S200: establishing, by a first device of the first user, a call with a device of the at least one second user;
- S300: checking, by the first device, whether a headset is connected to the first device;
- S400: checking, by the first device, whether there is at least one second device of the first user present, in case a headset is connected;
- S500: monitoring, by the at least one second device, the environment of the first device, in case there is at least one second device present;
- S600: checking, by the at least one second device, whether there is a sound in the environment of the first device;
- S700: analyzing and classifying, by the at least one second device, the sound pattern, in case a sound is detected in the environment of the first device;
- S800: alerting, by the second device, the first and/or the at least one second user of the detected sound;
- S900: adjusting, by the first user or by the device(s) of the first and the at least one second user, the sound level of the device(s), and/or muting, by the device of the at least one second user, by itself;
- S1000: terminating the method.

2. The method according to claim 1, wherein in case no headset is connected, the method further comprises
- S350: using, by the first device, the built-in microphone of said device;
- S400: checking, by the first device, whether there is at least one second device of the first user present;
- S500: monitoring, by the at least one second device, the environment of the first device, in case there is at least one second device present;
- S600: checking, by the at least one second device, whether there is a sound in the environment of the first device;
- S700: analyzing and classifying, by the at least one second device, the sound pattern, in case a sound is detected in the environment of the first device;
- S800: alerting, by the at least one second device, the first and/or the at least one second user of the detected sound;
- S900: adjusting, by the first user or by the device(s) of the first and the at least one second user, the sound level of the device(s), and/or muting, by the device of the at least one second user, by itself;
- S1000: terminating the method.

3. The method according to claim 1, wherein, the headset is connected to the first device via a universal serial bus, USB, connection or a wireless connection such as Bluetooth, Wi Fi or ZigBee.

4. The method according to claim 1, wherein, in case no second device of the first user is present, the first user is alerted by the first device to switch on at least one more of his/her devices.

5. The method according to any one of the preceding claims, wherein, in case no sound is detected, the method further comprises:
repeating steps S300 to S600.

6. The method according to any one of the preceding claims, wherein the devices of the first and at least one second user are selected from laptops, mobile phones, smart phones and/or desktop computers.

7. The method according to any one of the preceding claims, wherein the at least one second device of the first user has an application, app, and/or software component installed for monitoring the environment around the first device of the first user.

8. The method according to any one of the preceding claims, wherein the first device shares voice and/or audio streams with the at least one second device of the first user.

9. The method according to any one of the preceding claims, wherein the step of analyzing and classifying the detected sound further comprises:
- classifying the detected sound as being a sound leakage from the voice and/or audio stream, or
- classifying the detected sound as being multiple voices, footsteps and/or background noise.

10. The method according to claim 9, wherein in case a sound leakage from the voice and/or audio stream is detected, the first user is alerted using an audio message and/or a popup message to lower the sound level of the headset connected to the first device or the built-in microphone of the first device.

11. The method according to claim 9, wherein in case multiple voices, footsteps and/or background noise is detected, the first and the at least one second user are alerted using an audio message and/or a popup message, and the sound level of the devices of the first and the at least one second user are automatically adjusted, or the device of the at least one second user is muted.

12. The method according to any one of the preceding claims, further comprising after step S700:
- comparing, by the at least one second device, a sample stream with parts of the voice and/or audio stream shared by the first device with the at least one second device; and
- creating, by the first device, an alert message to the first users' screen in case the similarity of the sample stream and the voice and/or audio stream exceeds a threshold.

13. The method according to claim 12, wherein the threshold is in the range of between 30 to 70 dB, preferably between 35 to 65 dB, and more preferably between 40 and 60 dB.

14. A system for protecting communications from sound leakages, and wherein the system is configured to perform the method according to any one of the claims 1 to 13.

15. The system according to claim 14, wherein the system comprises a communication server, a first device and a second device of the first user and a device of a second user.
